# EUROPÄISCHE PATENTSCHRIFT

(11) **EP 1 419 983 B1**
(45) Veröffentlichungstag und Bekanntmachung des Hinweises auf die Patenterteilung: **22.02.2006**
(21) Anmeldenummer: 02024875.3
(22) Anmeldetag: 08.11.2002
(51) Int. Cl.: B65G 69/24, B64F 1/32

(54) **Verfahren zum Beladen bzw. Entladen eines Flugzeuges sowie verfahrbare Flugzeugbeladevorrichtung**
Method for loading/unloading an aircraft and movable loading device for aircrafts
Méthode de chargement/déchargement d'aéronefs et dispositif de chargement d'aéronefs mobile

(43) Veröffentlichungstag der Anmeldung: 19.05.2004
(60) Teilanmeldung: 05015929.2
(73) Patentinhaber: Trepel Airport Equipment GmbH, 97941 Tauberbischofsheim (DE)
(72) Erfinder: Arijoki, Seppo, 35510 Butzbach (DE); Hörner, Fred, 97877 Wertheim (DE); Reymann, Gottfried, 65191 Wiesbaden (DE)
(74) Vertreter: Quermann, Helmut

(56) Entgegenhaltungen:
- JP-A- 6 247 204
- US-A- 3 850 283
- US-A- 6 164 892

## Beschreibung

Die Erfindung betrifft ein Verfahren zum Beladen bzw. Entladen eines Flugzeugs sowie eine verfahrbare Flugzeugbeladevorrichtung.

Eine verfahrbare Flugzeugbeladevorrichtung ist beispielsweise aus der DE 37 30 415 C2 bekannt. Sie weist einen Rahmen, eine relativ zum Rahmen vertikal verfahrbare, hintere Ladeplattform - Hauptplattform - und eine relativ zum Rahmen vertikal verfahrbare, an das Flugzeug andockbare, vordere Ladeplattform - Frontplattform - auf. Kraftmittel dienen dem unabhängigen Heben und Senken der beiden Ladeplattformen, wobei die obere Fläche der jeweiligen Ladeplattform der Aufnahme des zu be- bzw. entladenden Gutes dient.

Jede Ladeplattform ist von Scheren getragen. Für das Scherenpaar der vorderen Ladeplattform ist zusätzlich ein Aushubzylinder vorgesehen, der an dem die Scheren des Scherenpaars verbindenden Joch angreift. Die hintere Ladeptattform wird mittels zweier Ketten angehoben, die im Bereich von Rollen umgelenkt werden, die mittels vertikal angeordneter Hydraulikzylinder heb- und senkbar sind. - Bei dieser Flugzeugbeladevorrichtung haben die Scheren für die jeweilige Plattform sowohl tragende Funktion als auch Führungsfunktion. Das Konstruktionsprinzip der Scheren bedingt eine maximale Förderhöhe der Ladeplattformen, die für besonders große Flugzeuge mit entsprechend hoch liegender Ladeebene nicht ausreicht. Bei solchen Flugzeugen befindet sich das Ladeniveau durchaus ca. 8,00 m oder mehr oberhalb der Fahrtläche des Flugzeugs bzw. der Flugzeugbeladevorrichtung.

Bei der beschriebenen Flugzeugbeladevorrichtung erfolgt das Beladen des Flugzeugs, indem die vordere Ladeplattform auf das Ladeniveau des Flugzeugs angehoben wird und dort verbleibt. Das Ladegut wird auf die abgesenkte hintere Ladeplattform geschoben und dann angehoben. Befindet sich die hintere Ladeplattform auf demselben Niveau wie die vordere Ladeplattform, wird das Ladegut über die vordere Ladeplattform in das Flugzeug geschoben. - Das maximale Hubniveau von der hinteren Ladeplattform und der vorderen Ladeplattform ist damit gleich.

Die Entladung des Flugzeugs erfolgt in umgekehrtem Sinne, indem das Ladegut aus dem Flugzeug auf die in angehobener Position befindlichen Ladeplattformen verbracht wird und, bei angehobener vorderer Ladeplattform die das Ladegut aufnehmende hintere Ladeplattform abgesenkt wird.

Ähnliche Flugzeugbeladevorrichtungen sind aus der DE 21 30 968 A und US 399 320 77 bekannt. Bei diesen ist in die hintere ladeplattform ein Fördersystem, das aus einer Vielzahl von Förderrollen gebildet ist, integriert. Aus der Praxis ist es bekannt, größere Förderhöhen durchaus mittels Scheren zu verwirklichen, ohne die Baulänge des Fahrzeugs vergrößern zu müssen. Hierbei kommen zwei oder mehrere übereinander angeordnete Scherensysteme zur Anwendung. Eine solche Gestaltung einer Flugzeugbeladevorrichtung ist baulich sehr aufwendig und kostspielig, andererseits technisch problematisch, da große Lasten, bei einer sehr niedrigen Bauhöhe (ca. 520 mm) der hinteren Ladeplattform, die systembedingt vorgeschrieben ist, gehoben und gesenkt werden müssen.

Aus der JP 06 247 204 A ist eine verfahrbare Flugzeugbeladevorrichtung zur Aufnahme des zu be- bzw. entladenden Guts, mit einem erhöhten Rahmen, mit Mitteln zum Heben und Senken der Ladeplattform, welche auf der oberen Fläche des Rahmens aufgenommen sind, wobei die Ladeplattform in einer angehobenen Position mit deren oberen Fläche eine Ebene mit der Ladeebene eines Flugzeugs bildet, bekannt. Diese verfahrbare Flugzeugbeladevorrichtung stellt einen Bestandteil einer Anordnung zweier verfahrbarer Ladevorrichtungen dar. Die Anordnung weist die Flugzeugbeladevorrichtung mit der heb- und senkbaren Ladeplattform zur Aufnahme des zu be- bzw. entladenden Guts, sowie eine andere Beladevorrichtung mit heb- und senkbarer Ladeplattform zur Aufnahme des zu be- bzw. entladenden Guts auf. Es sind ferner Mittel zum Heben und Senken der Ladeplattformen vorgesehen, wobei die Ladeplattform der Flugzeugbeladevorrichtung in einer angehobenen Position mit der oberen Fläche eine Ebene mit der Ladeebene eines Flugzeuges bildet, und in einer abgesenkten Position eine horizontale Ebene mit der Ladeebene der anderen Beladevorrichtung bildet. Diese andere Beladevorrichtung ist seitlich neben der Ladefläche eines Lastkraftwagens platzierbar und dient dem Zweck, das auf dem Lastkraftwagen längs platzierte Gut zu übernehmen und mittels einer dieser Beladevorrichtung zugeordneten Dreheinrichtung um 90° zu drehen, sodass das Gut, in Längsrichtung der Flugzeugbeladevorrichtung orientiert, auf deren abgesenkte Ladeplattform übergeschoben werden kann.

In der US-A-6,164,182 ist ein stationäres Be- und Entladesystem für Flugzeuge beschrieben. Zwei Ladeplattformen sind dabei nicht unmittelbar nebeneinander angeordnet. Beim Entladen des Flugzeuges wird das Ladegut mittels der ersten Ladeplattform auf ein Zwischenniveau eines Förderers angehoben und dann durch diesen Förderer einer zweiten Ladeplattform zugefördert, von der das Ladegut über einen weiteren Förderer dem Flugzeug zugefördert wird. Das Entladen des Flugzeuges erfolgt umgekehrt.

Aus der US-A-3,850,283 ist ein Fahrzeug zum Be- bzw. Entladen eines Flugzeugs bekannt, das drei Ladeplattformen aufweist. Die mittlere Ladeplattform ist immer zur Horizontalen geneigt angeordnet und es ist die untere und obere Plattform bezüglich dieser mittleren Plattform aus einer, eine Ebene mit dieser bildenden Plattform in eine horizontale Position schwenkbar. Bei bezüglich der Horizontalen geneigter Anordnung der Ladeplattformen erfolgt, zum Zwecke des Beladens des Flugzeugs, das Überschieben des Ladeguts von der unteren geneigten Plattform auf die mittlere geneigte Plattform und von dieser auf die obere geneigte Plattform. Das Be- bzw. Entladen des Fahrzeugs erfolgt bei horizontaler Ausrichtung von oberer bzw. unterer Ladeplattform.

Aufgabe der Erfindung ist es, ein Verfahren zum Beladen sowie ein Verfahren zum Entladen eines Flugzeugs mit sehr hohem Ladeniveau anzugeben sowie eine Vorrichtung zu schaffen, mit der ein solcher Ladevorgang auf besonders einfache Art und Weise, bei baulich optimaler Gestaltung der Flugzeugbeladevorrichtung bewerkstelligt werden kann. Bei dem Verfahren und der Vorrichtung ist insbesondere auch an besondere Flugzeugtypen gedacht, bei denen die Be- bzw. Entladung des jeweiligen Flugzeugs auf unterschiedlichen Ladeebenen erfolgt.

Die Erfindung schlägt zunächst ein Verfahren zum Beladen eines Flugzeugs mit folgenden Schritten vor:
a. Übernahme des Ladeguts auf eine erste Ladeplattform, die Bestandteil einer esten Flugzeugbeladevorrichtung ist,
b. Anheben des Ladeguts durch Heben der ersten Ladeplattform,
c. Überschieben des Ladeguts von der ersten Ladeplattform auf eine zweite, abgesenkte Ladeplattform, die Bestandteil einer zweiten Flugzeugbeladevorrichtung ist,
d. Anheben des Ladeguts durch Heben der zweiten Ladeplattform,
e. Überschieben des Ladeguts von der zweiten Ladeplattform in den Laderaum des Flugzeugs

wobei die Flugzeugbeladevorrichtungen Separate Fahrzeuge darstellen.

Bei diesem Beladevorgang ist somit vorgesehen, dass das Ladegut mittels der ersten Ladeplattform im Bereich einer unteren Hubstrecke gehoben werden kann, während die zweite Ladeplattform das Ladegut im Bereich einer oberen Hubstrecke hebt. Hierbei überschneiden sich der Bereich der unteren Hubstrecke und der der oberen Hubstrecke, so dass das Ladegut in der vollständigen oder teilweise angehobenen Stellung der ersten Ladeplattform auf die zweite Ladeplattform übergeschoben werden kann, die sich in teilweise oder vollständig abgesenkter Stellung befindet. Das maximale Hubniveau der ersten Ladeplattform entspricht vorzugsweise dem maximalen Hubniveau von Hauptplattform und Frontplattform der vorstehend zum Stand der Technik beschriebenen Flugzeugbeladevorrichtungen.

Unter diesem Aspekt erfolgt insbesondere das Anheben des Ladeguts, ausgehend vom angehobenen Niveau der ersten Ladeplattform, mittels der zweiten Ladeplattform um eine Höhe, die 50 % bis 100 % der Höhe beträgt, die das Ladegut mittels der ersten Ladeplattform angehoben wird.

Ist ein besonders großes Flugzeug zu beladen, beispielsweise ein Flugzeug des Typs Airbus A380, kann bei abgesenkter Stellung der zweiten Ladeplattform die untere Ladeebene des Flugzeugs, bei angehobener Stellung der zweiten Ladeplattform die obere Ladeebene des Flugzeugs bedient werden. Des weiteren kann bei vollständig oder weitgehend abgesenkter zweiter Ladeplattform die Ladeebene eines kleineren Flugzeugs, beispielsweise des Typs Airbus A300, A310, A340 oder Boeing B747 bedient werden. Konkret bedeutet dies, dass das Ladegut mittels der ersten Ladeplattform, ausgehend von einem Niveau in Bodennähe, bis zu ca. 6,00 m über den Boden, und mittels der zweiten Ladeplattform zwischen ca. 4,00 und 8,50 m über den Boden anhebbar ist.

Das Entladen des im erfindungsgemäßen Sinne beladenen Flugszeugs erfolgt in umgekehrter Reihenfolge. Insofern weist das Verfahren zum Entladen des Flugzeugs folgende Merkmale auf:
a. Überschieben des Ladeguts vom Laderaum des Flugzeugs auf eine angehobene zweite Ladeplattform, die Bestandteil einer zweiten Flugzeugbeladevorrichtung ist,
b. Absenken des Ladeguts durch Senken der zweiten Ladeplattform,
c. Oberschieben des Ladeguts von der zweiten Ladeplattform auf eine erste, angehobene Ladeplattform, die Bestandteil einer ersten Flugzeugbeladevorrichtung ist,
d. Absenken des Ladeguts durch Absenken der ersten Ladeplattform,
e. Ausgabe des Ladeguts von der ersten Ladeplattform,

wobei die Flugzeugbeladevorrichtungen Separate Fahr-zeige darstellen.

Die vorgenannten Prozent- und Maßangaben betreffend den Vorgang des Beladens des Flugzeugs gelten sinngemäß für den Vorgang des Entladens des Flugzeugs.

Gemäß der Erfindung ist somit vorgesehen, dass das Ladegut auf die erste Ladeplattform einer ersten Flugzeugbeladevorrichtung und auf die zweite Ladeplattform einer zweiten Flugzeugbeladevorrichtung übernommen wird. Es handelt sich somit um zwei unterschiedliche Vorrichtungen, mit Hilfe derer das Verfahren zum Be- bzw. Entladen durchgeführt wird. Es handelt sich um unabhängige Funktionseinheiten und separate Fahrzeuge. Bei der Ausbildung zweier Flugzeugbeladevorrichtungen, in Art zweier Fahrzeuge kommt der Flugzeugbeladevorrichtung, die die zweite Ladeplattform aufweist, die Funktion eines Adapters zwischen der ersten Flugzeugbeladevorrichtung und dem Flugzeug zu. Die erste Flugzeugbeladevorrichtung bzw. das erste Fahrzeug ist als herkömmliche Flugzeugbeladevorrichtung gemäß dem Stand der Technik, beispielsweise dem Stand der Technik nach der DE 37 30 415 C2 ausgebildet. Um die Höhendistanz zwischen der maximalen Förderhöhe der ersten Flugzeugbeladevorrichtung und dem oberen Ladeniveau des besonders großen Flugzeugs zu überbrücken, ist die zweite Ladeplattform als unabhängige, fahrbare Funktionseinheit in seiner Eigenschaft als Adapter vorgesehen. Um besonders große Flugzeuge, beispielsweise des Typs Airbus A 380, be- und entladen zu können, kann demzufolge auf übliche Flugzeugbeladevorrichtungen zurückgegriffen werden, wobei die Distanzhöhe zum oberen Ladeniveau des Flugzeugs mittels der zweiten Flugzeugbeladevorrichtung überbrückt wird.

Im vorbeschriebenen Sinne ist der Begriff Ladeplattform, insbesondere erste bzw. zweite Ladeplattform, umfassend zu verstehen. Es handelt sich hierbei um Funktionseinheiten. So kann sowohl die erste, als auch die zweite Ladeplattform durch eine Hauptplattform und eine Frontplattform gebildet sein. Statt der Frontplattform kann, insbesondere bei der zweiten Ladeplattform, eine Überladebrücke vorgesehen sein. Diese kann grundsätzlich auch zusätzlich zur Frontplattform vorgesehen sein. Über die Überladebrücke wird das Ladegut in den Laderaum des Flugzeugs übergeschoben. Die Überladebrücke ist vorgesehen, um auf Positionsveränderungen der Ladeebene beim Be- und Entladen des Flugzeugs reagieren zu können, indem sie angehoben bzw. gesenkt wird, seitlich geneigt wird oder vorne nach oben bzw. nach unten geneigt wird. Diese Positionsveränderungen berücksichtigen das Ein- bzw. Ausfedem des Flugzeugs sowie eine geänderte Neigung der Ladefläche des Flugzeugs beim Be- und Entladen des Flugzeugs.

Die Erfindung schlägt ferner eine verfahrbare Flugzeugbeladevorrichtung gemäß Anspruch 6.

Diese erfindungsgemäße Flugzeugbeladevorrichtung stellt somit die unter dem Aspekt des erfindungsgemäßen Verfahrens beschriebene zweite Flugzeugbeladevorrichtung dar. Die erfindungsgemäße Flugzeugbeladevorrichtung, die den Adapter bildet, ist nur in Zusammenwirken mit der anderen Flugzeugbeladevorrichtung im Sinne des Be- bzw. Entladens des Flugzeugs funktionsfähig, weil mittels dieser anderen Flugzeugbeladevorrichtung das Ladegut zunächst auf die abgesenkte Ausgangsebene der erfindungsgemäßen Flugzeugbeladevorrichtung angehoben werden muss bzw. beim Entladen des Flugzeugs aus dieser Ebene abgesenkt wird. Dadurch, dass die Flugzeugbeladevorrichtungen unabhängige Funktionseinheiten bilden, kann die andere Flugzeugbeladevorrichtung als normale Flugzeugbeladevorrichtung zum Be- und Entladen von Flugzeugen mit relativ niedriger Ladeebene benutzt werden. Betreiber von Flughäfen, die nunmehr Flugzeuge großer Ladehöhe, beispielsweise des Typs Airbus A380 abzufertigen haben, müssen nicht Flughafenvorfeldgeräte vorhalten, die ausschließlich auf diesen Flugzeugtyp abgestimmt sind. Es reicht aus, herkömmliche Flughafenvorfeldgeräte, das heißt herkömmliche Flugzeugbeladevorrichtungen zu verwenden, und die Distanzhöhe zum hohen Beladeniveau dieses Flugzeugs mit der die Adapterfunktion aufweisenden erfindungsgemäßen Flugzeugbeladevorrichtung zu überbrücken.

Vorzugsweise sind Scheren zum Heben der Ladeplattform von Flugzeugbeladevorrichtung vorgesehen.

Die Flugzegbeladevorrichtung weist vorzugsweise eine relativ zum verfahrbaren Ladeplattform relativ zum Rahmen verfahrbare, an das Flugzeug andockbare Übergabebrücke auf, ferner sind Kraftmittel zum unabhängigen Heben und Senken von Ladeplattform und Übergabebrücke vorgesehen, wobei die obere Fläche von Ladeplattform bzw. Übergabebrücke der Aufnahme des zu be- bzw. entladenden Guts dient. Es ist insbesondere daran gedacht, dass die Übergabebrücke mittels teleskopierbarer Kraftmittel heb- und senkbar ist. Um sich den geringfügig variierenden Positionen der Ladeebene des Flugzeugs beim Be- und Entladen des Flugzeugs anpassen zu können, ist vorgesehen, dass die Überladebrücke mittels Kraftmitteln horizontal ausfahrbar und / bezüglich der Horizontalen zur Seite neigbar und / oder bezüglich der Horizontalen vorn nach unten oder oben neigbar ist.

Weitere Merkmale der Erfindung sind in den Unteransprüchen, der Beschreibung der Figuren und den Figuren selbst dargestellt, wobei bemerkt wird, dass alle Einzelmerkmale und alle Kombinationen von Einzelmerkmalen weitere erfinderische Ausgestaltungen darstellen.

In den Figuren ist die Erfindung schematisch anhand Ausführungsbeispiele erläutert, ohne hierauf beschränkt zu sein. Es zeigt:
- Figur 1: den Beladevorgang eines Flugzeugs unter Verwendung einer herkömmlichen verfahrbaren Flugzeugbeladevorrichtung und einer die Funktion eines Adapters zwischen dieser und dem Flugzeug darstellende Ausführungsform einer Flugzeugbeladevorrichtung der Erfindung, die gleichfalls verfahrbar ist, in einer Seitenansicht,
- Figur 2: eine Ansicht II gemäß Figur 1 der die Adapterfunktion aufweisenden Flugzeugbeladevorrichtung,
- Figur 3: einen Beladevorgang eines Flugzeugs unter Verwendung einer zur Illustration dargestellten aber nicht beanspruchten Flugzeugbeladevorrichtung, die eine dem Flugzeug zugewandte Flugzeugbeladevorrichtung und eine dem Flugzeug abgewandte Beladevorrichtung aufweist, von der Seite gesehen,
- Figur 4: eine Ansicht IV gemäß Figur 3 der Flugzeugbeladevorrichtung,
- Figur 5: eine gegenüber den Ausführungsformen nach den Figuren 1 bis 4 modifizierte Gestaltung der Übergabebrücke, welche seitlich geneigt werden kann, in einer Ansicht II bzw. IV gemäß der Figuren 2 und 4,
- Figur 6: eine Ansicht VI gemäß Figur 5, wobei neben der im wesentlichen abgesenkten Stellung der Übergabebrücke deren vollständig angehobene Stellung mit veranschaulicht ist.

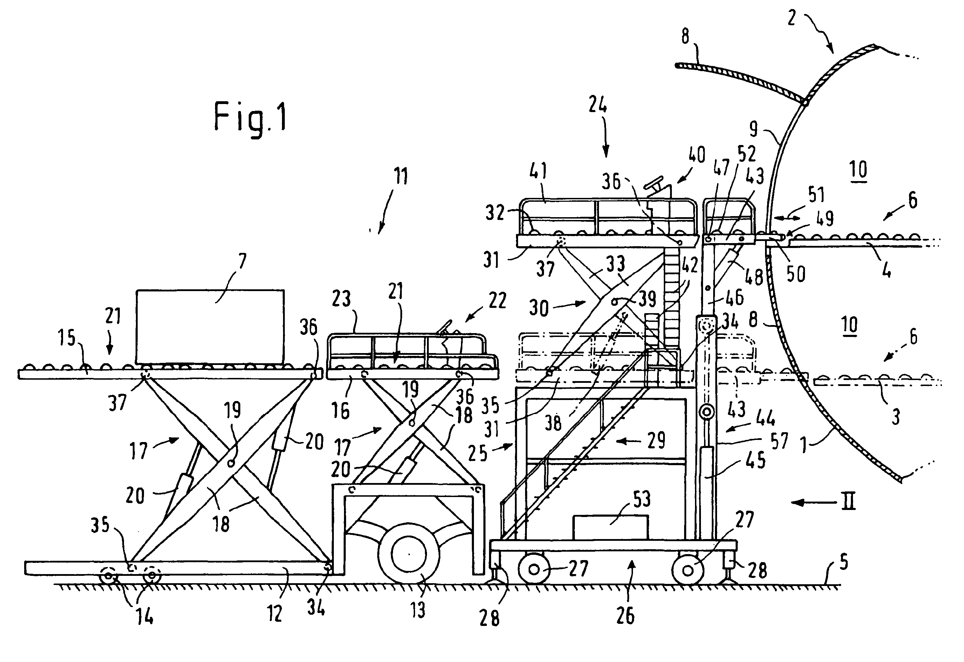

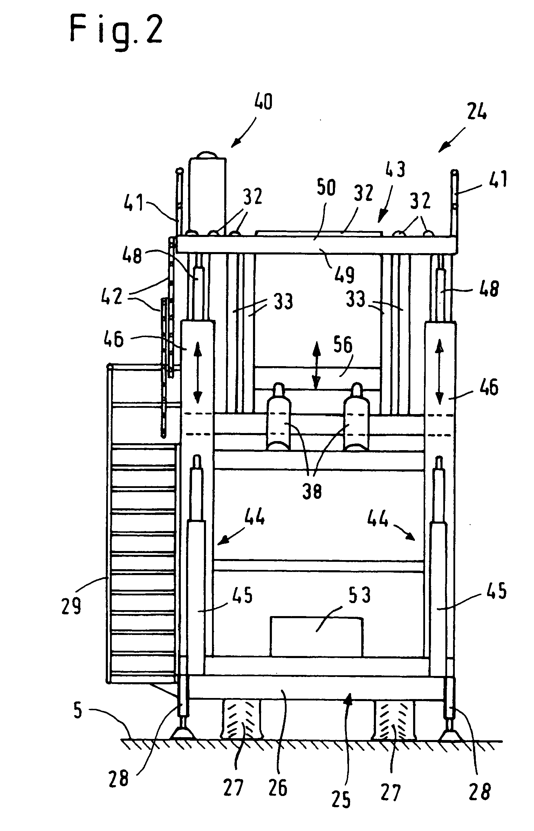

Bei der nachfolgenden Beschreibung wird zunächst auf die Darstellung der Figuren 1 und 2 Bezug genommen:

Gezeigt ist der Rumpf 1 eines Flugzeugs 2, bei dem es sich insbesondere um ein Flugzeug des Typs Airbus A380 handelt. Dieses Flugzeug weist eine untere Ladeebene 3, sowie eine darüber befindliche, obere Ladeebene 4 auf. Die obere Ladeebene befindet sich etwa auf einer Höhe von 8,20 m oberhalb des Bodens 5 des Flughafenvorfeldes. In den Ladeebenen 3 und 4 sind Fördersysteme in Art von Rollenbahnen 6 zugeordnet, mit Hilfe derer es möglich ist, Ladegut, bei dem es sich insbesondere um kastenförmige Behälter 7 handelt, durch die mittels der Ladeluke 8 verschließbare Ladeöffnung 9 in das Flugzeuginnere 10 zu verbringen .

Dem Verladen des Ladegutes 7 dient zunächst eine verfahrbare Flugzeugbeladevorrichtung 11, die in herkömmlicher Art und Weise gestaltet ist. Mit dieser Flugzeugbeladevorrichtung können üblicherweise Flugzeuge be- und entladen werden, deren Ladeebene zwischen 4,30 m und 5,60 m oberhalb des Bodens 5 liegt. Es handelt sich hierbei z. B. um Flugzeuge der Typen Airbus A300, A310, DC10, MD11 oder Boeing B747.

Die Flugzeugbeladevorrichtung 11 weist einen Rahmen 12 auf, der ein nicht veranschaulichtes Fahrgestell trägt, das der Aufnahme von lenkbaren Vorderrädern 13, ferner der Aufnahme von Hinterrädern 14 dient. Der Rahmen 12 ist gekröpft ausgebildet, so dass er der Aufnahme einer hinteren, größeren Ladeplattform 15 und einer vorderen, kleineren Ladeplattform 16 dient. Jede Ladeplattform 15 bzw. 16 ist von einem Scherenpaar 17 getragen, wobei die beiden Scheren ein nicht näher gezeigtes Joch verbindet. Der Drehpunkt der Scherenarme 18 ist mit der Bezugsziffer 19 bezeichnet. An den die Scherenarme 18 verbindenden Jochen greifen Hydraulikzylinder 20 an, die entweder ausschließlich im Scherensystem gelagert sind, wie zur Ladeplattform 15 veranschaulicht, oder aber zwischen dem Scherensystem und dem Rahmen 12 wirken, wie zur Ladeplattform 16 verdeutlicht. Die Hydraulikzylinder 20 dienen dem Heben der Ladeplattformen 15 und 16, darüber hinaus dem geregelten Absenken dieser Ladeplattformen. In die Ladeplattformen 15 und 16 sind Fördersysteme in Form von Rollenbahnen 21 integriert. Da auf der Ladeplattform 16 der eigenständigen Flugzeugbeladevorrichtung 11 gearbeitet wird, ist diese mit einem Steuerstand 22 und seitlichen Geländern 23 versehen.

In der Figur 1 ist auf der Rollenbahn 21 der hinteren Ladeplattform 15 ruhendes Ladegut 7 veranschaulicht, dass als quaderförmiger Behälter ausgebildet ist. Bei diesem handelt es sich um einen üblichen kastenförmigen Ladegutbehälter, der bei Flugzeugen Verwendung findet.

Figur 1 veranschaulicht für diese Flugzeugbeladevorrichtung 1 deren maximal angehobene Stellung von Ladeplattform 15 und Ladeplattform 16, die eine Ladeebene bilden. In dieser maximal angehobenen Stellung der Ladeplattformen 15 und 16 befinden sich diese auf einem Niveau von etwa 5,60 m über dem Boden 5, sodass mit dieser verfahrbaren Flugzeugbeladevorrichtung 11 maximal Flugzeuge des Typs Boeing B747 beladen werden können. In der maximal abgesenkten Stellung von Ladeplattform 15 bzw. 16 sind diese benachbart den dieser zugewandten parallelen Abschnitten des Rahmens 12 angeordnet. Die Ladeplattform 15 befindet sich somit knapp oberhalb des Bodens 5, konkret befindet sich die Aufnahmeebene der Rollenbahn 21 etwa 520 mm über dem Boden 5. Die Ladeplattform 16 befindet sich in deren abgesenkten Stellung höher, nämlich oberhalb des Radkastens der lenkbaren Vorderräder 13 der fahrbaren Flugzeugbeladevorrichtung 11.

Zwischen dieser Flugzeugbeladevorrichtung 11 und dem Flugzeug 2 befindet sich die, die Funktion eines Adapters aufweisende fahrbare Flugzeugbeladevorrichtung 24. Diese besitzt einen erhöhten Rahmen 25 mit in diesem gelagerten Fahrgestell 26, das der Aufnahme von vier lenkbaren und antreibbaren Rädern 27 dient, die im Bereich der Ecken des Rahmens angeordnet sind. In diesen Ecken ferner angeordnete ausfahrbare Stützelemente 28 dienen, bei Entlastung der Räder 27, der stabilen Lagerung der Flugzeugbeladevorrichtung 24 auf dem Boden 5. Seitlich des Rahmens 25 ist eine Leiter 29 angeordnet. Der Rahmen 25 nimmt im Bereich seiner oberen, horizontalen Fläche ein Scherenpaar 30 auf, in dem eine Ladeplattform 31 gelagert ist. Auch diese ist auf ihrer Oberseite mit Rollenbahnen 32 versehen. Die Scherenarme des Scherenpaars 30 sind mit der Bezugsziffer 33 bezeichnet, der Scherenmittelpunkt mit der Bezugsziffer 39. Dieses Scherenpaar 30 ist in Art der Scherenpaare 17 der Flugzeugbeladevorrichtung 11 gelagert, somit in einem rahmenseitigen Festende 34, einem rahmenseitigen Losende 35, einem ladeplattformseitigen Festende 36 und einem ladeplattformseitigen Losende 37. Entsprechend den Hydraulikzylindern 20 bei der Ladeplattform 16 sind zwei Hydraulikzylinder 38 bei der Ladeplattform 31 vorgesehen, die somit einerseits im Rahmen 25, andererseits im Joch 56 gelagert sind, dass die Scherenarme 33 des Scherenpaars 30 im Bereich zwischen den Festenden 34 und dem Scherenmittelpunkt 39, benachbart dem Scherenmittelpunkt verbindet.

Die Ladeplattform 31 ist mit einem Steuerstand 40 und einem Geländer 41 versehen. Um die angehobene Ladeplattform 31 erkennen bzw. verlassen zu können, ist eine Leiteranordnung 42 vorgesehen, die zur Leiter 29 führt.

Auf der dem Flugzeug 2 zugewandten Seite, weist die Flugzeugladevorrichtung 24 eine relativ zum Rahmen 25 vertikal verfahrbare, an das Flugzeug 2 andockbare Übergabebrücke 43 auf. Diese dient dem Zweck, das Ladegut 7 definiert von der Ladeplattform 31 zur Ladeebene des Flugzeugs 2 übergeben zu können bzw. vom Flugzeug 2 auf die Flugzeugbeladevorrichtung 24 übemehmen zu können. Die Erstreckung der Übergabebrücke 43 in Förderrichtung der Rollenbahnen 32 ist geringer als die Erstreckung des Ladeguts 7 in dieser Richtung. Grundsätzlich könnte allerdings auf dem Rahmen auch eine weitere Einheit mit Ladeplattform angeordnet sein, wie es zur Flugzeugbeladevorrichtung 11 gezeigt ist. Diese, vordere Ladeplattform könnte in bekannter Art und Weise mit einer Überfahrlippe versehen sein.

Die genannte Übergabebrücke 43 gemäß dem konkreten Ausführungsbeispiel ist in einem vertikalen Hubgerüst 44 gelagert, mit ausfahrbaren bzw. teleskopierbaren Gerüstbestandteilen. Das Heben und Senken der Übergabebrücke 43 erfolgt über Hydraulikzylinder 45, die zwischen dem Rahmen 25 und den beweglichen Teilen 46 des Hubgerüsts 44 angreifen. Zwischen dem heb- und senkbaren Abschnitt 46 und der um eine horizontale Achse 47 schwenkbar im Abschnitt 46 gelagerten Übergabebrücke 43 greifen Hydraulikzylinder 48 zum Verschwenken der Übergabebrücke 43 an, so dass die Übergabebrücke 43 bezüglich der horizontalen nach oben oder unten geneigt werden kann. Das vordere Ende der Übergabebrücke 43 ist mit der Bezugsziffer 49 bezeichnet und ragt in der angedockten Stellung der Flugzeugbeladevorrichtung 24 geringfügig in das Flugzeuginnere, benachbart dem zugewandten Ende der Rollenbahnen 6 des Flugzeugs 2.

Über weitere, nicht näher veranschaulichte Mittel lässt sich eine, Bestandteil der Übergabebrücke 43 bildende Lippe 50 im Sinne des gezeigten Doppelpfeils 51 in Richtung der Rollenbahnen 6 des Flugzeugs 2 ausfahren bzw. in umgekehrter Richtung einfahren. Auch die Übergabebrücke 43 ist mit einer Rollenbahn 52 versehen.

Im Rahmen 25, benachbart dem Fahrgestell 26 ist das Antriebsaggregat 53 für die verfahrbaren Bauteile der Flugzeugbeladevorrichtung 24 gelagert, somit das Antriebsaggregat insbesondere für die Räder 27, die Stützelemente 28, die Hydraulikzylinder 38, 48 und 45 sowie die Antriebseinheiten zum Ausfahren bzw. Neigen der Übergabebrücke 43.

In den Figuren 1 und 2 sind die Ladeplattform 31 und die Übergabebrücke 43 in ihrer maximal angehobenen Stellung veranschaulicht. In diesem Fall dienen sie dem Be- bzw. Entladen von Ladegut im Bereich des oberen Decks eines Flugzeugs des Typs Airbus A380, somit auf einem Niveau größer 8,00 m über dem Boden. In der Figur 1 ist zusätzlich die abgesenkte Stellung von Ladeplattform 31 und Übergabebrücke 43 veranschaulicht. Deren Rollenbahnen 32 und 52 befinden sich auf dem selben Niveau wie die Rollenbahnen 21 der Ladeplattformen 15 und 16. Über dieses Niveau kann der Ladevorgang im Bereich der unteren Ladeebene 3 des Flugzeugs vonstatten gehen.

Die ein- und ausfahrbare Lippe 50 der Übergabebrücke 43 ermöglicht es, diese ohne weiteres zwischen der oberen Ladeebene 4 und der unteren Ladeebene 3 des Flugzeugs 2 zu verfahren. Dies insbesondere unter dem Aspekt, dass sowohl die obere Ladeeben 4 als auch die untere Ladeebene 3 oberhalb bzw. unterhalb desjenigen Wandungsbereichs des Flugzeugs 1 angeordnet sind, der näher zum Hubmast 46 positioniert ist. Diese geometrische Konstellation schließt es aus, dass die Übergabebrücke 43, bei knapp aus dem Flugzeuginneren 10 herausgefahrenem Ende 49, unmittelbar senkrecht von der oberen Ladeebene 4 zur unteren Ladeebene 3 bewegt werden kann. Es ist vielmehr erforderlich die Lippe 50 weiter einzufahren.

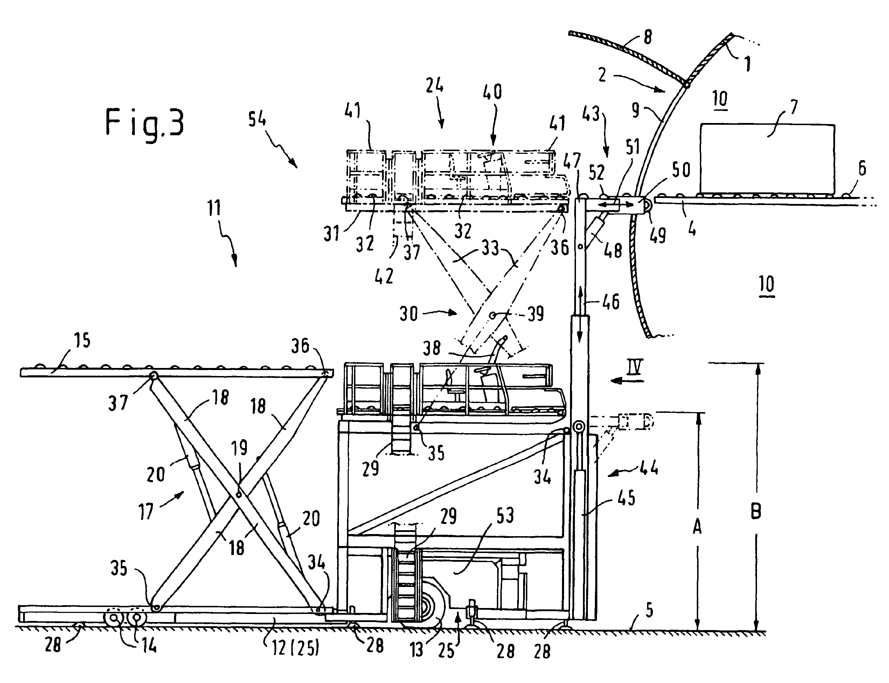

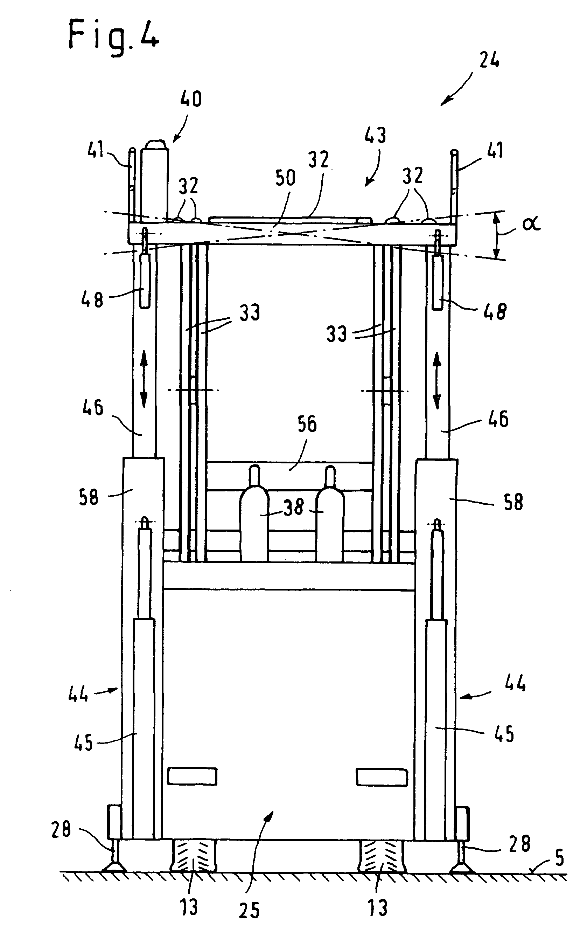

Die Flugzeugbeladevorrichtung nach den Figuren 3 und 4 unterscheidet sich von derjenigen nach den Figuren 1 und 2 grundsätzlich dadurch, dass die Flugzeugbeladevorrichtungen 11 und 24 in einem gemeinsamen Fahrzeug 54 integriert sind. Bei diesem Fahrzeug ist keine Ladeplattform 16 versehen, sondern es wirkt die Ladeplattform 15 unmittelbar mit der Ladeplattform 31 zusammen. Des weiteren ist der der Ladeplattform 15 zugeordnete Bereich, der die Hinterräder 14 aufnimmt, unmittelbar mit dem Rahmen 25 verbunden. Dieser ist gegenüber der Ausführungsform nach den Figuren 1 und 2 dahingehend modifiziert, dass er eine lenkbare und antreibbare Vorderachse mit Rädern 13 aufweist.

Für diese, in den Figuren 3 und 4 gezeigte Flugzeugbeladevorrichtung, sind für in ihrer Funktion gleiche Bauteile, dieselben Bezugsziffern verwendet worden, wie sie zu der Ausführungsform nach den Figuren 1 und 2 genannt sind. Insofern wird auf die vorstehenden Ausführungen betreffend Aufbau und Funktionsweise der Flugzeugbeladevorrichtung verwiesen.

In der Figur 3 ist die Ladeplattform 31 in ihrer maximal angehobenen und maximal abgesenkten Position veranschaulicht, Entsprechendes gilt für die Übergabebrücke 43. In der maximal angehobenen Position erfolgt über die Ladeplattform 31 und die Übergabebrücke 43 die Be- bzw. Entladung von Ladegut 7, das sich auf der oberen Ladeebene 4 eines Airbus A380 befindet. In der untersten Stellung, gemäß der Höhenangabe A in Figur 3, können über die Ladeplattform 31 und die Übergabebrücke 43 Flugzeuge des Typs Airbus A300, A310, DC10 und MD11 sowie eine Version Boeing B747 mit niedriger Ladeebene be- und entladen werden. Das gezeigte Niveau der hinteren Ladeplattform 15, entsprechend der Höhenangabe B in Figur 3, veranschaulicht das Ladeniveau eines üblichen Flugzeuges Typ Boeing B747. Wird die Ladeplattform 31 und die Übergabebrücke 43 auf das gezeigte Niveau der Ladeplattform 15 angehoben, kann dieser Flugzeugtyp be- und entladen werden. Das veranschaulichte Niveau der Ladeplattform 15 stellt die maximal angehobene Position dieser Ladeplattform dar. In vorbeschriebener Art und Weise ist bei der Flugzeugbladevorrichtung nach den Figuren 3 und 4 das Hubgerüst 44 im Rahmen 25 gelagert und die Übergabebrücke 43 in unterschiedlichen Richtungen längen- und winkelbeweglich gelagert.

Beladen wird das Flugzeug 2 mittels des Ladeguts 7, indem das Ladegut auf die abgesenkte Ladeplattform 15 übernommen wird. Anschließend wird das Ladegut durch Heben der Ladeplattform 15 angehoben. Es erfolgt dann das Überschieben des Ladeguts 7 von der Ladeplattform 15 gegebenenfalls über die Ladeplattform 16 zur Ladeplattform 31. Anschließend wird das Ladegut 7 durch Heben der Ladeplattform 31 angehoben. Schließlich erfolgt das Überschieben des Ladeguts 7 von der Ladeplattform 31 in den Laderaum 10 des Flugzeugs 2. Das Entladen des Flugzeugs erfolgt bei umgekehrten Ablauf.

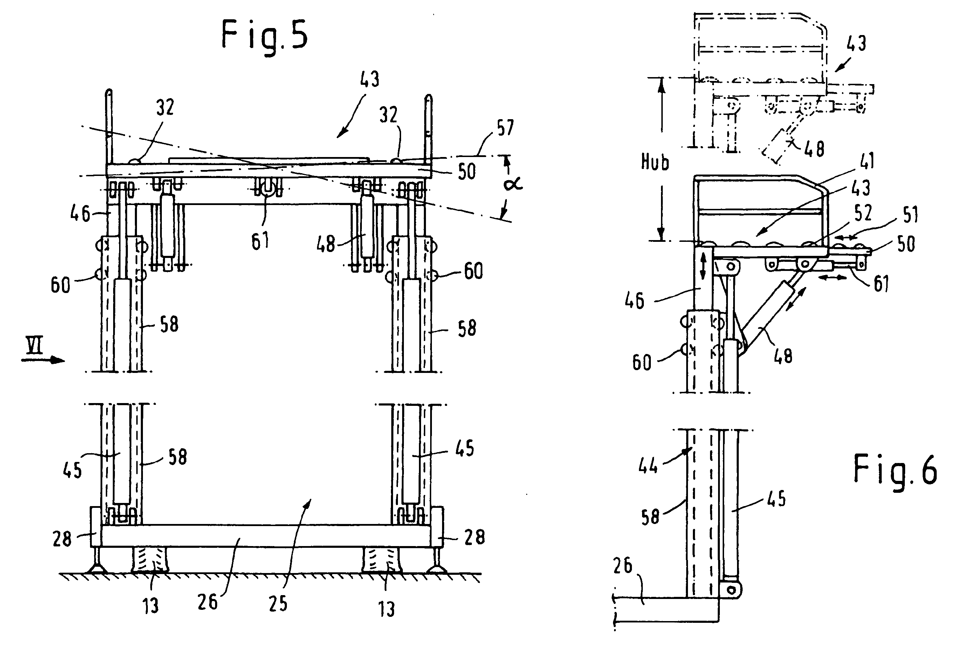

Die Ausführungsformen nach den Figuren 5 und 6 veranschaulicht eine gegenüber den Ausführungsformen nach den Figuren 1 bis 4 modifizierte Variante der Flugzeugbeladevorrichtung im Bereich der Übergabebrücke 43. Bei dieser ist die Übergabebrücke 43 relativ zur Horizontalen beidseitig um einen Winkel α nach oben und unten neigbar, wobei dieses "Tilting" durch Verwindung der Übergabebrücke 43 einschließlich der Bestandteil der Übergabebrücke 43 bildenden Lippe 50 erfolgt.

Für die in den Figuren 5 und 6 gezeigte Ausführungsform sind für in ihrer Funktion gleiche Bauteile dieselben Bezugsziffern verwendet worden, wie sie zu den Ausführungsformen nach den Figuren 1 bis 4 genannt sind. Insofern wird auf die vorstehenden Ausführungen betreffend Aufbau und Funktionsweise der Flugzeugbeladevorrichtung verwiesen.

Bei den Ausführungsformen nach den Figuren 5 und 6 wird die Übergabebrücke 43 über zwei Zylinder 45 angehoben, die zwischen dem Rahmen 25 und dem ausfahrbaren Profil 46 des Hubgerüsts 44 angreifen. Das mit dem Fahrgestell 26 verbundene profilierte Teil 58 des Hubgerüstes 44 nimmt den verfahrbaren Abschnitt 46 des Hubgerüstes 44 geführt auf, wobei diese Führung mittels Rollen 60 erfolgt. Das Schwenken - Tilting - der Übergabebrücke 43 um den Winkel α in der in Figur 5 gezeigten Richtung bzw. auch in der Gegenrichtung um diesen Winkel erfolgt durch entgegengesetzte Beaufschlagung der doppelwirkenden Zylinder 48. Mittels eines doppelwirkenden Zylinders 61 lässt sich die, Bestandteil der Übergabebrücke 43 bildende Lippe 50 im Sinne des gezeigten Doppelpfeils 51 in Richtung der Rollenbahnen 6 des Flugzeugs 2 ausfahren bzw. in umgekehrter Richtung einfahren.

## Patentansprüche

1. Verfahren zum Beladen eines Flugzeugs (2) mit folgenden Schritten:
a. Übernahme des Ladeguts (7) auf eine erste Ladeplattform (15), die Bestandteil einer ersten Flugzeugbeladevorrichtung (11) ist,
b. Anheben des Ladeguts (7) durch Heben der ersten Ladeplattform (15),
c. Überschieben des Ladeguts (7) von der ersten Ladeplattform (15) auf eine zweite, abgesenkte Ladeplattform (31), die Bestandteil einer zweiten Flugzeugbeladevorrichtung (24) ist,
d. Anheben des Ladeguts (7) durch Heben der zweiten Ladeplattform (31),
e. Überschieben des Ladeguts (7) von der zweiten Ladeplattform (31) in den Laderaum (10) des Flugzeugs (2),
wobei die Flugzeugbeladevorrichtungen (11, 24) separate Fahrzeuge darstellen.

2. Verfahren nach Anspruch 1, wobei das Anheben des Ladeguts (7), ausgehend vom angehobenen Niveau der ersten Ladeplattform (15), mittels der zweiten Ladeplattform (31) um eine Höhe erfolgt, die 50 bis 100% der Höhe beträgt, die das Ladegut (7) mittels der ersten Ladeplattform (15) angehoben wird.

3. Verfahren nach Anspruch 1 oder 2, wobei das Ladegut (7) mittels der ersten Ladeplattform (15), ausgehend von einem Niveau in Nähe des Bodens (5) bis zu 6,00 m über dem Boden (5), und mittels der zweiten Ladeplattform (31) zwischen 4 und 8,50 m über den Boden (5) anhebbar ist.

4. Verfahren nach einem der Ansprüche 1 bis 3, wobei das Ladegut (7) von der zweiten Ladeplattform (31) über eine Übergabebrücke (43) in den Laderaum (10) des Flugzeugs (2) übergeschoben wird.

5. Verfahren zum Entladen eines Flugzeugs (2) mit folgenden Merkmalen:
a. Überschieben des Ladeguts (7) vom Laderaum (10) des Flugzeugs (2) auf eine angehobene zweite Ladeplattform (31), die Bestandteil einer zweiten Flugzeugbeladevorrichtung (24) ist,
b. Absenken des Ladeguts (7) durch Senken der zweiten Ladeplattform (31),
c. Überschieben des Ladeguts (7) von der zweiten Ladeplattform (31) auf eine erste, angehobene Ladeplattform (15), die Bestandteil einer ersten Flugzeugbeladevorrichtung (11) ist,
d. Absenken des Ladeguts (7) durch Absenken der ersten Ladeplattform (15),
e. Ausgeben des Ladeguts (7) von der ersten Ladeplattform (15)
wobei die Flugzeugbeladevorrichtungen (11, 24) separate Fahrzeuge darstellen.

6. Verfahrbare Flugzeugbeladevorrichtung (24) zum Durchführen des Verfahrens nach einem der vorgehenden Ansprüche mit einem erhöhten Rahmen (25), mit Mitteln zum Heben und Senken der Ladeplattform (31), welche auf der oberen Fläche des Rahmens (25) aufgenommen sind, wobei die Ladeplattform (31) in einer angehobenen Position mit deren oberen Fläche eine Ebene mit der Ladeebene eines Flugzeugs bildet, **dadurch gekennzeichnet, dass** die Ladeplattform (31) in ihrer maximal angehobenen Stellung auf einem Niveau ca. 8,50 m über dem Boden liegt und in ihrer maximal gesenkten Stellung auf einem Niveau ca. 4,00 m über dem Boden liegt, wobei die Ladeplattform (31) in einer abgesenkten Position mit deren oberen Fläche eine Ebene mit der Ladeebene einer angehobenen Plattform (15) einer anderen Beladevorrichtung (11) bildet.

7. Vorrichtung nach Anspruch 6, **dadurch gekennzeichnet, das**s Scheren (30) zum Heben der Ladeplattform (31) vorgesehen sind.

8. Vorrichtung nach einem der Ansprüche 6 bis 10, **dadurch g**e**kennzeichneit, dass** die Flugzeugbeladevorrichtung (24) eine relativ zum verfahrbaren Ladeplattform (31) und relativ zum Rahmen (25) verfahrbare, an das Flugzeug (2) andockbare Übergabebrücke (43) aufweist, sowie Kraftmittel (38, 45) zum unabhängigen Heben und Senken von Ladeplattform (31) und Übergabebrücke (43) vorgesehen sind, wobei die obere Fläche von Ladeplattform (31) bzw. Übergabebrücke (43) der Aufnahme des zu be- bzw. entladenden Guts (7) dient.

9. Vorrichtung nach Anspruch 8, **dadurch gekennzeichnet, dass** die Übergabebrücke mittels Kraftmitteln (45) teleskopierbar ist.

10. Vorrichtung nach Anspruch 8 oder 9, **dadurch gekennzeichnet, dass** die Überladebrücke (43) mittels Kraftmitteln (61; 48) horizontal ausfahrbar und / oder bezüglich der Horizontalen bzw. Seite neigbar und / oder bezüglich der Horizontalen vorn nach unten oder oben neigbar ist.

## Revendications

1. Procédé de chargement d'un aéronef (2) comprenant les étapes suivantes :
a) transférer la charge (7) sur une première plate-forme de chargement (15) qui fait partie d'un premier dispositif de chargement d'aéronefs (11),
b) soulever la charge (7) en levant la première plate-forme de chargement (15),
c) pousser la charge (7) de la première plate-forme de chargement (15) sur une deuxième plate-forme de chargement (31) abaissée qui fait partie d'un deuxième dispositif de chargement d'aéronefs (24),
d) soulever la charge (7) en levant la deuxième plate-forme de chargement (31),
e) pousser la charge (7) de la deuxième plate-forme de chargement (31) dans la soute (10) de l'aéronef (2),
les dispositifs de chargement d'aéronefs (11, 24) représentant des véhicules séparés.

2. Procédé selon la revendication 1,
**caractérisé en ce que**
le soulèvement de la charge (7) s'effectue à partir du niveau levé de la première plate-forme de chargement (15) au moyen de la deuxième plate-forme de chargement (31) d'une hauteur qui est de 50 à 100 % de la hauteur à laquelle la charge (7) est soulevée au moyen de la première plate-forme de chargement (15).

3. Procédé selon la revendication 1 ou 2,
**caractérisé en ce que**
la charge (7) peut être soulevée au moyen de la première plate-forme de chargement (15), à partir d'un niveau proche du sol (5), jusqu'à 6,00 m au-dessus du sol (5), et au moyen de la deuxième plate-forme de chargement (31), entre 4 et 8,50 m au-dessus du sol (5).

4. Procédé selon l'une quelconque des revendications 1 à 3,
**caractérisé en ce que**
la charge (7) est poussée sur une passerelle de transbordement (43) depuis la deuxième plate-forme de chargement (31) dans la soute (10) de l'aéronef (2).

5. Procédé de déchargement d'un aéronef (2) avec les caractéristiques suivantes :
a) pousser la charge (7) depuis la soute (10) de l'aéronef (2) sur une deuxième plate-forme de chargement (31) levée qui fait partie d'un deuxième dispositif de chargement d'aéronefs (24),
b) abaisser la charge (7) en abaissant la deuxième plate-forme de chargement (31),
c) pousser la charge (7) depuis la deuxième plate-forme de chargement (31) sur une première plate-forme de chargement (15) levée qui fait partie d'un premier dispositif de chargement d'aéronefs (11),
d) abaisser la charge (7) en abaissant la première plate-forme de chargement (15).
e) sortir la charge (7) de la première plate-forme de chargement (15), les dispositifs de chargement d'aéronefs (11, 24) représentant des véhicules séparés.

6. Dispositif de chargement d'aéronefs mobile (24) pour la mise en oeuvre du procédé selon l'une quelconque des revendications précédentes, comprenant un cadre surélevé (25), des moyens logés au niveau de la face supérieure du cadre (25) pour lever et abaisser la plate-forme de chargement (31), 1a plate-forme de chargement (31), dans une position levée, formant avec sa face supérieure un plan avec le plan de chargement d'un aéronef,
**caractérisé en ce que**
la plate-forme de chargement (31), dans sa position levée maximale, se situe à un niveau de 8,50 m environ au-dessus du sol et, dans la position abaissée maximale, à un niveau de 4,00 m environ au-dessus du sol, la plate-forme de chargement (31), dans une position abaissée, formant avec sa face supérieure un plan avec le plan de chargement d'une plate-forme (15) levée d'un autre dispositif de chargement (11).

7. Dispositif selon la revendication 6,
**caractérisé en ce que**
des ciseaux (30) sont prévus pour lever la plate-forme de chargement (31).

8. Dispositif selon la revendication 6 ou 7,
**caractérisé en ce que**
le dispositif de chargement d'aéronefs (24) présente une passerelle de transbordement (43) disposée en déplacement par rapport à la plate-forme de chargement (31) et au cadre (25) et pouvant être accostée à l'aéronef (2), ainsi que des moyens de force (38, 45) pour lever et abaisser indépendamment la plate-forme de chargement (31) et la passerelle de transbordement (43), la face supérieure de la plate-forme de chargement (31) ou de la passerelle de transbordement (43) servant à recevoir la charge à charger ou à décharger.

9. Dispositif selon la revendication 8,
**caractérisé en ce que**
la passerelle de transbordement est télescopique à l'aide de moyens de force (45).

10. Dispositif selon la revendication 8 ou 9,
**caractérisé en ce qu'**
à l'aide de moyens de force (61 ; 48) la passerelle de transbordement (43) peut être sortie horizontalement et/ou inclinée par rapport à l'horizontale ou la verticale et/ou inclinée vers le bas ou vers le haut par rapport à l'horizontale.

## Claims

1. Method for loading an aircraft (2), having the following steps:
a. transfer of the cargo (7) onto a first loading platform (15) which is a component of a first aircraft loading device (11),
b. lifting the cargo (7) by raising the first loading platform (15),
c. pushing across of the cargo (7) from the first loading platform (15) to a second, lowered loading platform (31), which is a component of a second aircraft loading device (24),
d. lifting the cargo (7) by raising the second loading platform (31),
e. pushing across of the cargo (7) from the second loading platform (31) into the cargo hold (10) of the aircraft (2), whereby the aircraft loading devices (11, 24) represent separate vehicles.

2. Method according to claim 1, whereby, starting from.. the raised level of the first loading platform (15), the lifting of the cargo (7) is carried out by means of the second loading platform (31) by a height that is in the range of 50% to 100% of the height that the cargo (7) is lifted by means of the first loading platform (15).

3. Method according to claim 1 or 2, whereby, starting from a level close to the ground (5), the cargo (7) may be lifted by means of the first loading platform (15) up to 6.00 m above the ground (5) and, by means of the second loading platform (31), may be lifted in the range of 4 m to 8.50 m above the ground (5).

4. Method according to one of the claims 1 to 3, whereby the cargo (7) is pushed across from the second loading platform (31) via a transfer bridge (43) into the cargo hold (10) of the aircraft (2).

5. Method for unloading an aircraft (2) having the following features:
a. pushing across of the cargo (7) from the cargo hold (10) of the aircraft (2) to a raised second loading platform (31), which is a component of a second aircraft loading device (24),
b. lowering of the cargo (7) by lowering the second loading platform (31),
c. pushing across the cargo (7) from the second loading platform (31) to a first, raised loading platform (15), which is a component of a first aircraft loading device (11),
d. lowering of the cargo (7) by lowering the first loading platform (15),
e. delivery of the cargo (7) from the first loading platform (15), whereby the aircraft loading devices (11, 24) represent separate vehicles.

6. Driveable aircraft loading device (24) for carrying out the method according to one of the previous claims, having a raised frame (25) and means for raising and lowering the loading platform (31), said means being accommodated on the upper surface of the frame (25), whereby in a raised position, with its upper surface the loading platform (31) forms one plane with the loading plane of an aircraft, **characterised in that**, in its maximum raised position, the loading platform (31) lies at a level approximately 8.50 m above the ground and in its maximum lowered position, lies at a level approximately 4.00 m above the ground, whereby, in a lowered position, with its upper surface the loading platform (31) forms one plane with the loading plane of a raised platform (15) of another loading device (11).

7. Device according to claim 6, **characterised in that** a scissor-type mechanism (30) is provided for raising the loading platform (31).

8. Device according to one of the claims 6 to 10, **characterised in that** the aircraft loading device (24) has a transfer bridge (43) movable relative to the movable loading platform (31) and relative to the frame (25), dockable on the aircraft (2), as well as power means (38, 45) for independent raising and lowering of the loading platform (31) and the transfer bridge (43), whereby the upper surface of the loading platform (31) or the transfer bridge (43) serves to receive the cargo (7) to be loaded or unloaded.

9. Device according to claim 8, **characterised in that** the transfer bridge may be telescoped by means of power means (45).

10. Device according to claim 8 or 9, **characterised in that**, by means of power means (61; 48), the transfer bridge (43) is extensible horizontally and/or tiltable relative to the horizontal or side and/or is tiltable with its front downwardly or upwardly relative to the horizontal.
